# EUROPÄISCHE PATENTANMELDUNG

(11) **EP 4 610 754 A1**
(43) Veröffentlichungstag der Anmeldung: **03.09.2025**
(21) Anmeldenummer: 24160071.7
(22) Anmeldetag: 27.02.2024
(51) Int. Cl.: G05B 19/418, G05B 23/02

(54) **VERARBEITUNG VON ANLAGENDATEN**

(71) Anmelder: Primetals Technologies Austria GmbH, 4031 Linz (AT)
(72) Erfinder: Braunschmid, Wolfgang, St. Florian (AT); Dirnberger, Wolfgang, Oehling (AT); Herzog, Kurt, Wilhering (AT); Hoermanseder, Roland, Leonding (AT); Woess, Daniel, Aigen-Schlägl (AT)
(74) Vertreter: Metals@Linz

(57) **Zusammenfassung**

Die vorliegende Erfindung betrifft ein Verfahren (100) und ein System (10) zur Verarbeitung von Anlagendaten (D) sowie ein Verfahren (200) zum Erstellen einer Anlagenbeschreibung (A). Dabei wird i) auf eine auf einem Server (30) in einem vorbestimmten Dateiformat gespeicherte Beschreibung (A) einer Anlage (20) mit einem Endgerät (40) zugegriffen (S2), ii) durch den Server (30) die Anlagendaten (D), welche einen Betriebszustand der Anlage (20) charakterisieren, abgerufen (S3) und iii) die auf dem Server (30) gespeicherte Anlagenbeschreibung (A) mit den abgerufenen Anlagendaten (D) angereichert und über das Endgerät (40) ausgegeben (S4).

## Beschreibung

### Gebiet der Technik

Die vorliegende Erfindung betrifft ein Verfahren und ein System zur Verarbeitung von Anlagendaten sowie ein Verfahren zum Erstellen einer Anlagenbeschreibung.

### Stand der Technik

Ein wesentlicher Bestandteil der Wartung von technischen Einrichtungen, zum Beispiel Anlagen wie Walzwerken zur Metallverarbeitung, oder der Fehlerdiagnose ist üblicherweise die Bestimmung des aktuellen Betriebszustands anhand von aktuellen Anlagendaten, zum Beispiel Istwerten, Abweichungen zu Sollwerten und/oder dergleichen. Diese Werte müssen dazu durch entsprechendes Personal den korrekten Anlagenteilen, also bestimmten Messgliedern, Stellgliedern oder anderen Komponenten der jeweiligen Anlage, zugeordnet werden können, um eine sinnvolle Interpretation zu ermöglichen.

Auf diese Anlagendaten kann in der Regel in einer Leitstelle oder an Steuerständen, sogenannten operator stations, zugegriffen werden. Hierbei ist jedoch nachteilig, dass die Zuordnung der so ermittelten Werte zu den verschiedenen Anlagenteilen unter Umständen nicht eindeutig oder zumindest schwierig und umständlich ist, insbesondere für unerfahrenes Personal. Außerdem kann es einen erhöhten Aufwand bedeuten, bei der (Wartungs-)Arbeit unmittelbar an einer Anlage immer wieder die Leitstelle oder einen Steuerstand aufsuchen zu müssen, um aktuelle oder gegebenenfalls aktualisierte Werte in Erfahrung zu bringen. Daher werden in der Praxis benötigte Werte oft über Sprechfunk aus der Leitstelle oder von einem Steuerstand an Personal "im Feld", d. h. an der Anlage, übermittelt.

Eine andere Möglichkeit, die Anlagendaten oder zumindest einen Teil davon direkt im Feld bereitzustellen, besteht darin, diese durch entsprechende Anzeigen der Anlage auszugeben. Kosten- und Platzgründe verhindern in der Regel allerdings, dass auf diese Weise alle potentiell wichtigen Daten zugänglich sind. Insbesondere Sollwerte sind in der Regel lediglich in der Anlagensteuerung hinterlegt und somit nur in der Leitstelle oder einem Steuerstand abrufbar. Zudem besteht auch hier die Schwierigkeit der Zuordnung eines Werts zur korrekten Anlagenkomponente.

### Zusammenfassung der Erfindung

Vor diesem Hintergrund ist es eine Aufgabe der vorliegenden Erfindung, die Bereitstellung von Anlagendaten zu verbessern, insbesondere die Zugänglichkeit von Anlagendaten, insbesondere im Feld, und/oder deren Interpretation zu erleichtern.

Diese Aufgabe wird gelöst durch ein Verfahren und ein System zur Verarbeitung von Anlagendaten sowie ein Verfahren zum Erstellen einer Anlagenbeschreibung gemäß den unabhängigen Ansprüchen.

Bevorzugte Ausführungsformen sind Gegenstand der abhängigen Ansprüche sowie der folgenden Beschreibung.

Gemäß einem ersten Aspekt der Erfindung wird oder werden bei dem, insbesondere computerimplementierten, Verfahren zur, insbesondere automatischen, Verarbeitung von Anlagendaten i) auf eine auf einem Server in einem vorbestimmten Dateiformat gespeicherte Beschreibung einer Anlage mit einem Endgerät zugegriffen, ii) durch den Server Anlagendaten, welche einen Betriebszustand der Anlage charakterisieren, abgerufen und iii) die auf dem Server gespeicherte Anlagenbeschreibung mit den abgerufenen Anlagendaten, insbesondere automatisiert, angereichert und über das Endgerät ausgegeben.

Eine in einem vorbestimmten Dateiformat gespeicherte Anlagenbeschreibung im Sinne der Erfindung ist vorzugsweise eine bereits vorliegende, insbesondere vollständige, Beschreibung der Anlage, zum Beispiel eine Dokumentation der Anlage. Die Anlagenbeschreibung kann beispielsweise Schaltpläne, Bedienvorschriften, Kennwerte, Lagepläne, Rohrleitungs- und Instrumentenfließschema (Engl. piping and instrumentation diagram, kurz P&ID) und/oder dergleichen enthalten. Infolgedessen handelt es sich bei der Anlagenbeschreibung vorzugsweise um ein gebräuchliches technisches Dokument, dem zum Beispiel Details zum Aufbau oder der Funktionsweise der Anlage entnehmbar sind.

Ein Aspekt der Erfindung beruht auf dem Ansatz, Anlagendaten einer Anlage auf einem, vorzugsweise mobilen, Endgerät verfügbar zu machen. Dies ermöglicht es einem Benutzer, die Anlagendaten "mit ins Feld" zu nehmen, wo ohne Unterbrechungen an der Anlage gearbeitet werden kann, zum Beispiel Wartungsarbeiten oder Reparaturen vorgenommen werden können. Zweckmäßigerweise dient das Endgerät dabei lediglich der Ausgabe der Anlagendaten und arbeitet daher als Client in einer Server-Client-Struktur. Infolgedessen ist es bevorzugt, dass die Anlagendaten durch einen Server abgerufen werden, mit dem das Endgerät kommunizieren kann. Da in modernen Anlagen die relevanten Anlagendaten üblicherweise ohnehin in einer Anlagensteuerung erfasst sind und verarbeitet werden und infolgedessen digital vorliegen, ist die Übergabe über eine geeignete Schnittstelle an den Server in der Regel ohne größeren Aufwand möglich.

Durch den Server können die Anlagendaten auch aufbereitet und/oder in eine Form gebracht werden, die eine Lesbarkeit durch den Benutzer erhöht und die Interpretation einzelner, in den Anlagendaten enthaltener Werte, erleichtert. Insbesondere kann eine auf dem Server in einem vorbestimmten Dateiformat gespeicherte Anlagenbeschreibung mit den abgerufenen Anlagendaten angereichert, d. h. durch die Anlagendaten modifiziert und/oder ergänzt, werden. Die Anlagendaten können zum Beispiel in ein PDF-Dokument integriert, insbesondere geschrieben, werden. Die Verwendung von PDF-Dokumenten ist aufgrund ihrer Verbreitung und der Möglichkeit zur geräteunabhängigen Dokumentenanzeige bevorzugt. Andere Formate sind aber ebenfalls denkbar.

Die vom Server gespeicherte, insbesondere angereicherte, Anlagenbeschreibung wird dann mittels des Endgeräts ausgegeben. Das PDF-Dokument - oder ein Dokument in einem anderen gängigen Dateiformat - lässt sich also auf dem Endgerät öffnen. Dies erlaubt eine Entnahme der darin nun enthaltenen aktuellen Anlagendaten durch den Benutzer im Zusammenhang mit den für die Anlage spezifischen, in der Anlagenbeschreibung enthaltenen Informationen. Die Anlagendaten stehen infolgedessen nicht mehr nur für sich alleine, sondern können über ihre Integration in die Anlagenbeschreibung korrekt interpretiert und zugeordnet werden.

Durch das Anreichern der auf dem Server gespeicherten Anlagenbeschreibung mit den Anlagendaten kann dem Benutzer auf dem Endgerät insbesondere eine Visualisierung der Anlagendaten zur Verfügung gestellt werden. Diese Visualisierung umfasst zweckmäßigerweise das Anzeigen der Anlagendaten an den entsprechenden Anlagenteilen, also Messgliedern, Stellgliedern oder anderen Komponenten der Anlage, in der geöffneten (angereicherten) Anlagenbeschreibung. Die Anlagendaten lassen sich durch den Benutzer so leicht verständlich und intuitiv erfassen. Fehler bei der Zuordnung der angezeigten Anlagendaten zu den entsprechenden Messgliedern, Stellgliedern oder anderen Komponenten können vermieden oder zumindest minimiert werden.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

Um einem Benutzer des Endgeräts möglichst aktuelle Informationen zum Betriebszustand der Anlage anzeigen zu können, wird die Anreicherung der auf dem Server gespeicherten Anlagenbeschreibung vorzugsweise durch den Zugriff mit dem Endgerät ausgelöst. Zum Beispiel können die Anlagendaten erst beim Zugriff auf die Anlagenbeschreibung, etwa durch Öffnen des entsprechenden PDF-Dokuments, in die Anlagenbeschreibung integriert, insbesondere hineingeschrieben, werden. Alternativ oder zusätzlich ist es denkbar, auch das Abrufen der Anlagendaten durch den Server durch den Zugriff mit dem Endgerät auszulösen. Das dadurch umsetzbare "on demand"-Verhalten des Servers kann sich auch vorteilhaft im Hinblick auf reduzierten Datenverkehr und reduzierte Rechen- und Speichernutzung erweisen.

Eine zusätzliche oder alternative Möglichkeit, möglichst aktuelle Informationen an den Nutzer ausgeben zu können, besteht darin, die Anlagendaten während des Zugriffs mit dem Endgerät auf die gespeicherte Anlagenbeschreibung, insbesondere während der Ausgabe der angereicherten Anlagenbeschreibung durch das Endgerät, im Wesentlichen kontinuierlich, d. h. in Echtzeit, durch den Server abzurufen. Zweckmäßigerweise wird entsprechend auch die Anlagenbeschreibung während des Zugriffs mit dem Endgerät auf die gespeicherte Anlagenbeschreibung, insbesondere während der Ausgabe der angereicherten Anlagenbeschreibung durch das Endgerät, im Wesentlichen kontinuierlich, d. h. in Echtzeit, mit den abgerufenen Anlagendaten angereichert. Beispielsweise können die in einem PDF-Dokument angezeigten Anlagendaten im Wesentlichen in Echtzeit, zum Beispiel mit einer Aktualisierungsrate von etwa 1 s, aktualisiert werden. Relevante Mess- und andere anlagenspezifischen Werte können dem Benutzer dadurch live und auf einen Blick in einer für ihn leicht verständlichen Darstellung zur Verfügung gestellt werden.

Wie bereits angedeutet kann eine leicht interpretierbare Darstellung der Anlagendaten durch einen Benutzer erreicht werden, indem wenigstens eine in den Anlagendaten enthaltene Information bei der Anreicherung der Anlagenbeschreibung, insbesondere automatisch, einem spezifischen, in der Anlagenbeschreibung beschriebenen Anlagenteil, zum Beispiel einem Messglied, einem Stellglied oder einer anderen Komponente der Anlage, zugeordnet wird. Es muss demnach nicht mehr dem Benutzer überlassen bleiben, beispielsweise den abstrakten "Ausgangsdruck 1" einer bestimmten Pumpe oder den abstrakten "Öffnungsgrad A" einem bestimmten Ventil der Anlage zuzuordnen. Vielmehr kann der Benutzer über die bevorzugte, bei der Anreicherung (automatisch) erfolgende Zuordnung die entsprechende Information direkt im Zusammenhang mit dem betreffenden Anlagenteil entnehmen.

Eine in den Anlagendaten enthaltene Information im Sinne der Erfindung ist vorzugsweise eine mit den Anlagendaten assoziierte Information, insbesondere eine aus den Anlagendaten ableitbare Information, zum Beispiel ein Mess- oder Sollwert. Folglich können die Anlagendaten Parameterwerte wie zum Beispiel Messwerte, d. h. Istwerte bzw. Stellwerte, und/oder Sollwerte oder andere Zustandswerte enthalten oder zumindest charakterisieren. Diese Parameterwerte sind zweckmäßigerweise mit jeweils einem spezifischen Anlagenteil assoziiert, also z. B. mit einem Messwert eines Messglieds, einem Ist- oder Stellwert und/oder einem Sollwert eines Stellglieds, einem Betriebszustand einer Komponente (z. B. "an" oder "aus") und/oder dergleichen.

Zur Zuordnung dieser Parameterwerte zu spezifischen Anlagenteilen ist es zweckdienlich, wenn diese Parameterwerte bei der Anreicherung in die Anlagenbeschreibung eingefügt, insbesondere der Anlagenbeschreibung hinzugefügt, werden. Vorzugsweise werden diese Parameterwerte dabei an vorbestimmten Positionen in die Anlagenbeschreibung eingefügt. Beispielsweise können die Parameterwerte an der grafischen Darstellung des entsprechenden Anlagenteils innerhalb eines Schaltplans oder P&lDs eingefügt werden. Ein Benutzer kann dadurch mit einem Blick erkennen, wie dieses Anlagenteil gegenwärtig arbeitet, welche Messwerte es liefert oder welche Eigenschaften es hat.

Zur Zuordnung der in den Anlagendaten enthaltenen Information zu spezifischen Anlagenteilen, insbesondere zum Einfügen solcher Information an vorbestimmten Positionen in der Anlagenbeschreibung, zum Beispiel einem PDF-Dokument, werden vorzugsweise Marker in der auf dem Server gespeicherten Anlagenbeschreibung verwendet. Dies wird weiter unten noch ausführlicher beschrieben.

Wie eingangs bereits geschildert ist es üblich, dass die Anlagendaten in einer Leitstelle oder einem Steuerstand verfügbar sind. Infolgedessen ist es insbesondere auch im Hinblick auf eine Implementierung des Verfahrens mit bereits bestehenden Anlagen zweckdienlich, wenn der Server die Anlagendaten von einem Leitsystem zur Prozesssteuerung über eine erste Kommunikationsverbindung, zum Beispiel über ein erstes Netzwerk, etwa ein LAN oder Ähnliches, abruft. Der Begriff "Leitsystem" soll hier in bevorzugter Weise sowohl die Leitstelle als auch etwaige Steuerstände umfassen. Der Server muss also nicht unmittelbar mit der Anlage über eine spezifische, anlagenseitig vorgegebene Schnittstelle, zum Beispiel OPC-UA, oder einen Zwischenserver mit dieser Schnittstelle kommunizieren. Vielmehr kann es ausreichen, den Server in ein konventionelles, das Leitsystem umfassendes Netzwerk einzubinden. Dies erlaubt es, den Server anlagen- bzw. umfeldunabhängig zu konfigurieren. Der Server kann beispielsweise als virtueller oder physischer Windows Server eingerichtet sein.

Die direkte Kommunikation über die spezifische Schnittstelle mit der Anlage kann dann vielmehr beim Leitsystem verbleiben. Entsprechend werden die Anlagendaten dem Leitsystem von der Anlage zweckmäßigerweise über eine von der ersten Kommunikationsverbindung verschiedene zweite Kommunikationsverbindung, insbesondere über die spezifische, anlagenseitig vorgegebene Schnittstelle, bereitgestellt.

Gemäß einem zweiten Aspekt weist das System zur, insbesondere automatischen, Verarbeitung von Anlagendaten auf: i) einen Server, auf dem eine Beschreibung einer Anlage in einem vorbestimmten Dateiformat gespeichert und der dazu eingerichtet ist, Anlagendaten, welche einen Betriebszustand der Anlage charakterisieren, abzurufen und die Anlagenbeschreibung damit, insbesondere automatisiert, anzureichern; ii) ein Endgerät; und iii) eine erste Kommunikationsverbindung zwischen dem Server und dem Endgerät, über welche eine mit dem Endgerät auf die vom Server gespeicherte, insbesondere angereicherte, Anlagenbeschreibung zugreifbar ist.

Dieses System ermöglicht es einem Benutzer, die Anlagendaten "mit ins Feld" zu nehmen, wo ohne Unterbrechungen an der Anlage gearbeitet werden kann, zum Beispiel Wartungsarbeiten oder Reparaturen vorgenommen werden können. Dabei kann die Interpretation einzelner, in den Anlagendaten enthaltener Werte erleichtert werden, da die Anlagendaten infolge der Anreicherung der Anlagenbeschreibung nicht mehr nur für sich alleine stehen müssen, sondern beispielsweise spezifischen Anlagenteilen zugeordnet werden können. Die Anlagendaten lassen sich durch den Benutzer so leicht verständlich und intuitiv erfassen. Fehler bei der Zuordnung der angezeigten Anlagendaten zu den entsprechenden Messgliedern, Stellgliedern oder anderen Komponenten können vermieden oder zumindest minimiert werden.

Das System weist vorzugsweise, neben der ersten Kommunikationsverbindung, insbesondere dem ersten Netzwerk, zwischen dem Endgerät und dem Server auch die von der ersten Kommunikationsverbindung verschiedene zweite Kommunikationsverbindung, insbesondere über die anlagenseitig vorgegebene Schnittstelle, zwischen dem Server und der Anlage auf. Damit können einerseits die Anlagendaten von dem ebenfalls zuvor bereits erwähnten Leitsystem abgerufen werden. Alternativ ist es aber auch denkbar, dass die Anlagendaten direkt über die zweite Kommunikationsverbindung, insbesondere die anlagenseitig vorgegebene Schnittstelle, vom Server abrufbar oder zumindest zum direkten Abruf durch den Server bereitstellbar sind. Anders gesagt kann die zweite Kommunikationsverbindung eine unmittelbare oder über einen Zwischenserver mittelbare Kommunikationsverbindung zwischen dem Server und der Anlage darstellen, über welche die Anlagendaten direkt durch den Server abrufbar sind. In diesem Fall ist das hier beschriebene System unabhängig vom Leitsystem.

Wie bereits angedeutet erfolgt die Anreicherung der auf dem Server gespeicherten Anlagenbeschreibung vorzugsweise mithilfe von Markern. Hierzu ist es zweckdienlich, wenn die Anlagenbeschreibung mehrere dieser Marker enthält, auf deren Grundlage die Anlagendaten in die Anlagenbeschreibung integrierbar sind. Die Marker können beispielsweise in einer als PDF-Dokument gespeicherten Anlagenbeschreibung enthalten sein, etwa in Form eines unsichtbaren Textstrings. Auf diese oder eine ähnliche, zumindest gleichwirkende, Weise können die Marker z. B. Stellen der Anlagenbeschreibung kennzeichnen, an denen die Anlagendaten in die Anlagenbeschreibung hineingeschrieben werden oder werden sollen. Alternativ oder zusätzlich können die Marker auch diejenige Information kennzeichnen, die - eventuell an der vorgegebenen Stelle - in die Anlagenbeschreibung aufgenommen wird oder werden soll.

Beispielsweise kann jeder Marker jeweils eine Position innerhalb der Anlagenbeschreibung definieren, an der eine in den Anlagendaten enthaltene Information, insbesondere spezifische Information wie beispielsweise ein Mess- oder Sollwert, in die Anlagenbeschreibung integriert wird. Insbesondere können die Marker in der Anlagenbeschreibung an ebendiesen Positionen vorgesehen sein oder in die Anlagenbeschreibung eingefügt werden. Beispielsweise können die Marker jeweils an Darstellungen verschiedener Anlagenteile in einem Schaltplan oder P&ID vorgesehen sein oder eingefügt werden. Die auf Grundlage eines solchen Markers in die Anlagenbeschreibung bei der Anreicherung hineingeschriebene Information kann so durch einen Benutzer intuitiv und fehlerunanfällig mit dem jeweiligen Anlagenteil assoziiert werden.

Alternativ oder zusätzlich ist jedem Marker zweckmäßigerweise ein Identifikator zugeordnet, der eine in den Anlagendaten enthaltene, in die Anlagenbeschreibung zu integrierenden Information definiert. Beispielsweise kann der Identifikator ein Komponentenkennzeichen, etwa eine Identifikationsnummer, aufweisen, über welches die entsprechende Information von dem Leitsystem oder unmittelbar über die zweite Kommunikationsverbindung von der Anlage abgeholt werden kann. Erfolgt die Bereitstellung der Anlagendaten beispielsweise über den Standard OPC-UA, kann der Identifikator auch eine entsprechende OPC-Variable, insbesondere eine vollständige OPC-UA-Adresse, aufweisen. Mithilfe dieser OPC-Variable kann über die zweite Kommunikationsverbindung dann der von dem zugehörigen Anlagenteil ermittelte Wert abgerufen werden.

Ebenso kann jeder Marker eine von mehreren vorgegebenen Darstellungsarten einer in den Anlagendaten enthaltenen Information definieren. Beispielsweise kann jeder Marker eine Darstellungskennung aufweisen, welche eine der vorgegebenen Darstellungsarten kennzeichnet. Mithilfe des Markers wird so zweckmäßigerweise das Erscheinungsbild der Anlagendaten in der angereicherten Anlagenbeschreibung beeinflussbar. Beispielsweise kann der Marker vorgeben, welche Schriftart, welche Schriftgröße, welche Farbe und/oder dergleichen die Darstellung der Anlagendaten in der angereicherten Anlagenbeschreibung aufweist.

Alternativ hierzu kann auch über den dem Marker bevorzugt zugeordneten Identifikator in einer z. B. ebenfalls auf dem Server gespeicherten Datenbank, etwa einer entsprechenden Konfigurationsdatei, die entsprechende Darstellungsart der in den Anlagendaten enthaltenen Information ermittelt werden. Über den Identifikator, der z. B. ein Komponentenkennzeichen des entsprechenden Anlagenteils enthalten kann, lässt sich der Datenbank beispielsweise die dem Identifikator oder dem Komponentenkennzeichen in der Datenbank zugeordnete Darstellungsart entnehmen. Alternativ oder zusätzlich kann die Datenbank auch Adressinformation zum Abrufen der Anlagendaten, insbesondere der spezifischen Parameterwerte für die verschiedenen Anlagenteile, enthalten.

Infolgedessen ist es bevorzugt, dass der Server die Datenbank, insbesondere die Konfigurationsdatei, aufweist, in der jedem Marker eine Adressinformation zum Abrufen der Anlagendaten und/oder eine von mehreren möglichen Darstellungsarten der Anlagendaten beim Anreichern der Anlagenbeschreibung zugeordnet ist. In der Datenbank können den Markern oder diesen zugeordneten Identifikatoren, insbesondere in den Identifikatoren enthaltenen Komponentenkennzeichen, zum Beispiel OPC-UA-Adressen zugeordnet sein, die ein Abrufen der entsprechenden Parameterwerte erlauben. Es ist auch denkbar, dass die Datenbank für verschiedene Kategorien von Anlagenteilen jeweils eine generische OPC-UA-Adresse mit einem Platzhalter für den dem Marker zugeordneten Identifikator, z. B. ein im Identifikator enthaltenes Komponentenkennzeichen, aufweist. Eine solche Datenbank ermöglicht insbesondere eine automatisierte Erstellung der Anlagenbeschreibung.

Gemäß einem dritten Aspekt der Erfindung wird oder werden bei dem, insbesondere zumindest teilweise computerimplementierten, Verfahren zum Erstellen einer Anlagenbeschreibung i) eine Beschreibung einer Anlage erstellt, ii) wenigstens ein Marker in die Anlagenbeschreibung eingefügt, auf dessen Grundlage die Anlagenbeschreibung mit Anlagendaten, die einen Betriebszustand der Anlage charakterisieren, anreicherbar sind, und iii) die Anlagenbeschreibung in einem vorbestimmten Dateiformat auf einem Server gespeichert.

Dadurch ist es möglich, die Anlagenbeschreibung mit den Anlagendaten anzureichern, wenn auf die auf dem Server gespeicherte Anlagenbeschreibung - zum Beispiel mit einem Endgerät - zugegriffen wird. Damit können die Anlagendaten mit "ins Feld" genommen werden. Beispielsweise kann anhand der Marker in eine als PDF-Dokument gespeicherte Anlagenbeschreibung eine in den Anlagendaten enthaltene Information hineingeschrieben werden, wenn das PDF-Dokument mit dem Endgerät geöffnet wird. Dies erlaubt es einem Benutzer, den Betriebszustand der Anlage und gegebenenfalls sogar einzelner Anlagenteile beim Studieren der Anlagenbeschreibung, zum Beispiel einer Dokumentation der Anlage, direkt mit zu erfassen.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- Fig 1: ein Beispiel eines Systems zur Verarbeitung von Anlagendaten,
- Fig 2: ein weiteres Beispiel eines Systems zur Verarbeitung von Anlagendaten,
- Fig 3: ein Beispiel einer mit Anlagendaten angereicherten Anlagenbeschreibung,
- Fig 4: ein Beispiel der mit Markern versehenen Anlagenbeschreibung aus Fig 3,
- Fig 5: ein Beispiel eines Verfahrens zur Verarbeitung von Anlagendaten, und
- Fig 6: ein Beispiel eines Verfahrens zum Erstellen einer Anlagenbeschreibung.

Soweit zweckdienlich, werden in den Figuren dieselben Bezugszeichen für dieselben oder einander entsprechende Elemente der Erfindung verwendet.

### Beschreibung der Ausführungsformen

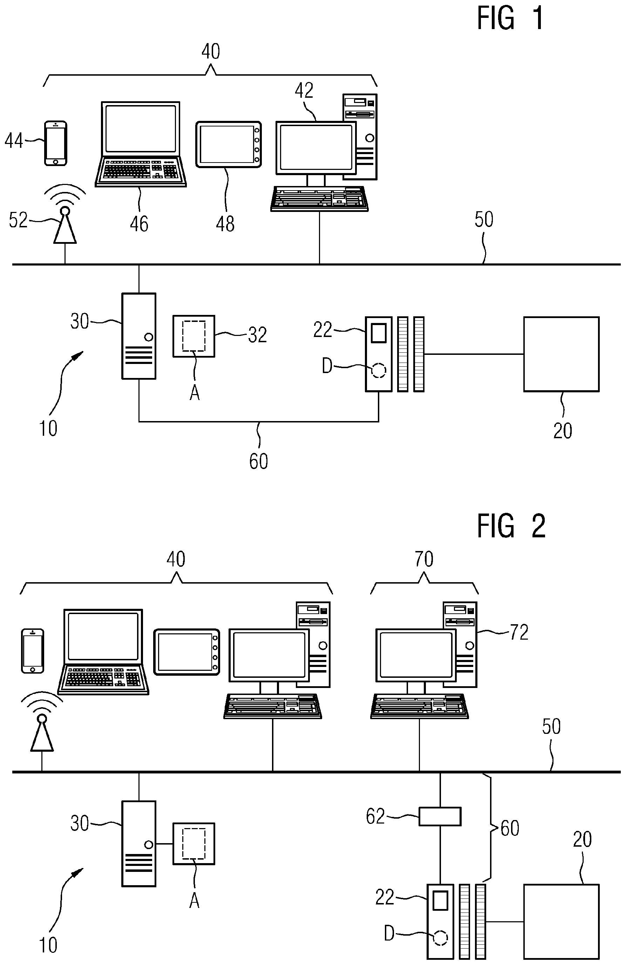

FIG 1 zeigt ein Beispiel eines Systems 10 zur Verarbeitung von Anlagendaten D, welche einen Betriebszustand einer Anlage 20 charakterisieren. Das System 10 weist einen Server 30, mehrere Endgeräte 40 und eine erste Kommunikationsverbindung 50 zwischen dem Server 30 und den Endgeräten 40 auf. Auf dem Server 30, insbesondere einer Speichervorrichtung 32 des Servers 30, ist eine Anlagenbeschreibung A der Anlage 20 in einem vorbestimmten Dateiformat gespeichert. Der Server 30 ist dazu eingerichtet, beispielsweise dazu programmiert, die Anlagendaten D abzurufen und die Anlagenbeschreibung A damit anzureichern. Beispielsweise kann der Server 30 die Anlagendaten D abrufen und darin enthaltene Information, etwa Mess- und Sollwerte, in die Anlagenbeschreibung A hineinschreiben.

Zum Abrufen der Anlagendaten D ist eine von der ersten Kommunikationsverbindung 50 verschiedene zweite Kommunikationsverbindung 60 zwischen dem Server 30 und der Anlage 20 vorgesehen. Als Teil der Anlage 20 soll hierbei auch eine Anlagensteuerung 22, zum Beispiel eine speicherprogrammierbaren Steuerung (Engl. programmable logic controller, kurz PLC), verstanden werden. Über die zweite Kommunikationsverbindung 60 kann der Server 30 so insbesondere in Echtzeit auf die Variablen der Anlagensteuerung 22 und damit auf Mess- und Sollwerte verschiedener Anlagenteile wie Messglieder, Stellglieder oder anderer Komponenten der Anlage 20 zugreifen. Diese Anlagendaten D sind vorzugsweise basierend auf einem Standard, zum Beispiel OPC-UA, vom Server 30 über die zweite Kommunikationsverbindung 60 abholbar.

Im gezeigten Beispiel ist die zweite Kommunikationsverbindung 60 zwischen dem Server 30 und der Anlage 20, insbesondere der Anlagensteuerung 22, eine direkte bzw. unmittelbare Verbindung. Grundsätzlich ist aber auch denkbar, dass die zweite Kommunikationsverbindung 60 einen Zwischenserver umfasst, über den der Server 30 indirekt bzw. mittelbar mit der Anlage 20, insbesondere der Anlagensteuerung 22, verbunden ist und die Anlagendaten D abrufen kann. Über einen solchen Zwischenserver können insbesondere die Anlagendaten D mehrerer Anlagen 20 aufwandsarm bereitgestellt werden.

Die Endgeräte 40 sind zweckmäßigerweise dazu geeignet, über die erste Kommunikationsverbindung 50, zum Beispiel ein Netzwerk, auf die vom Server 30 gespeicherte Anlagenbeschreibung A zuzugreifen. Einzelne Endgeräte 40, zum Beispiel Workstations bzw. Personalcomputer 42, können dazu kabelgebunden an die erste Kommunikationsverbindung 50 angeschlossen sein. Bevorzugt sind die Endgeräte 40 jedoch tragbar bzw. mobil ausgebildet, zum Beispiel als Mobiltelefon 44, Laptop 46 oder Tablett 48. In diesem Fall sind einzelne Endgeräte 40 zweckmäßigerweise über eine Luftschnittstelle 52, zum Beispiel WLAN, an die erste Kommunikationsverbindung 50 angeschlossen. Dadurch lassen sie sich bei Arbeiten an der Anlage 20 problemlos mitführen.

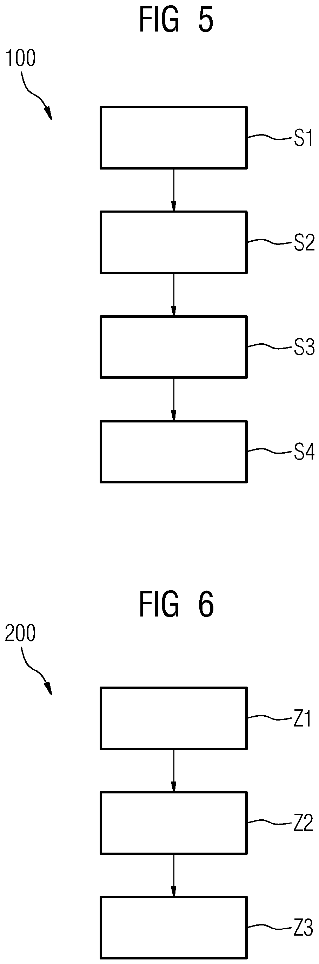

Um den Zugriff auf die mit den Anlagendaten D angereicherte Anlagenbeschreibung A zu ermöglichen, kann der Server 30 eine Webseite hosten. Auf diese Webseite kann zweckmäßigerweise von jedem Endgerät 40 zugegriffen werden, welches sich im gleichen Netzwerk wie der Server 30 befindet, d. h. an die erste Kommunikationsverbindung 50 angeschlossen ist. In bevorzugter Weise lässt sich dann mit einem auf dem Endgerät 40 laufenden Browser die über die Webseite bereitgestellte Anlagenbeschreibung A, zum Beispiel ein PDF-Dokument, öffnen, in der die aktuellen Anlagendaten D angezeigt werden. Dies ist im Detail im Zusammenhang mit FIG 5 weiter unten beschrieben.

FIG 2 zeigt ein weiteres Beispiel eines Systems 10 zur Verarbeitung von Anlagendaten D. Das System 10 entspricht im Wesentlichen dem in FIG 1 gezeigten System mit dem Unterschied, dass vorliegend ein an die erste Kommunikationsverbindung 50 angeschlossenes Leitsystem 70 zur Steuerung der Anlage 20 dargestellt ist und der Server 30 nicht unmittelbar über die zweite Kommunikationsverbindung 60 mit der Anlage 20, insbesondere der Anlagensteuerung 22, verbunden ist.

Vielmehr ist der Server 30 in FIG 2 dazu eingerichtet, zum Beispiel dazu programmiert, die Anlagendaten D über die erste Kommunikationsverbindung 50 vom Leitsystem 70, zum Beispiel einer Leitstelle oder einem Steuerstand 72, abzurufen. Das Leitsystem 70 dient der Steuerung eines mittels der Anlage 20 ausgeführten Prozesses und muss infolgedessen Zugriff auf die Variablen der Anlagensteuerung 22, d. h. auf die Anlagendaten D, haben. Zu diesem Zweck ist die Anlage 20, insbesondere die Anlagensteuerung 22, an die erste Kommunikationsverbindung 50 angeschlossen. Das Leitsystem 70 kann die Anlagendaten D dann über einen Standard, zum Beispiel OPC-UA, von der Anlagensteuerung 22 oder, wie in FIG 2 gezeigt, von einem Zwischenserver 62, abholen.

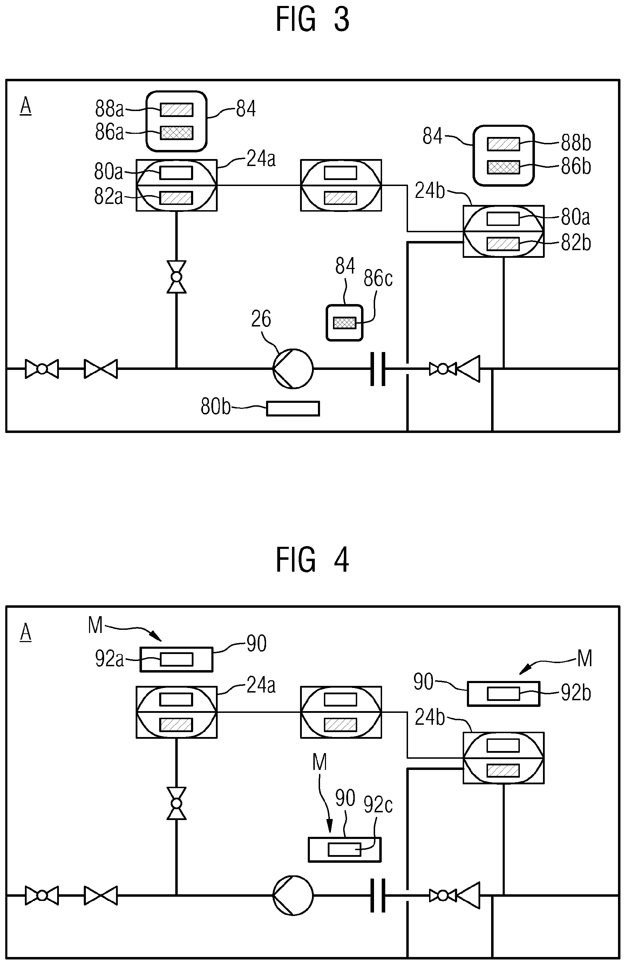

FIG 3 zeigt ein Beispiel einer mit Anlagendaten angereicherten Anlagenbeschreibung A. Vorliegend enthält die Anlagenbeschreibung A ein Rohrleitungs- und Instrumentenfließschema (Engl. piping and instrumentation diagram, kurz P&ID); grundsätzlich kann es sich bei der Anlagenbeschreibung A aber um jegliche Art von Dokumentation einer Anlage handeln. Insbesondere kann die Anlagenbeschreibung A alternativ oder zusätzlich zu dem P&ID auch einen oder mehrere Schaltpläne, Lagepläne und/oder dergleichen enthalten.

Das P&ID zeigt, neben mehreren Leitungen und fluidtechnischen Steuereinrichtungen, zwei Messglieder in Form von Drucksensoren 24a, 24b sowie eine motorangetriebene Pumpe 26. In der Anlagenbeschreibung A sind die Drucksensoren 24a, 24b als solche durch eine Beschriftung 80a identifiziert. Ebenso ist auch die Pumpe 26 mit einer solchen Beschriftung 80b versehen. Die Beschriftungen 80a, 80b geben, sofern dies durch die verwendeten Symbole nicht ohnehin eindeutig sein sollte, den Typ des eingezeichneten Anlagenteils an.

Zusätzlich ist in der Anlagenbeschreibung A eine Identifikationsnummer 82a, 82b der Drucksensoren 24a, 24b angegeben. Zweckmäßigerweise weist jedes eingezeichnete Anlagenteil eine solche eindeutige Identifikationsnummer auf, auch wenn sie in der Anlagenbeschreibung A nicht explizit angegeben ist.

Die Anlagendaten sind innerhalb der Anlagenbeschreibung A in Form von umrahmten Datenfeldern 84 dargestellt. Diese Datenfelder 84 sind in unmittelbarer Umgebung verschiedener, in der Anlagenbeschreibung A gezeigter Anlagenteile angeordnet und zeigen Parameterwerte 86a, 86b, 86c des jeweiligen Anlagenteils an. Im vorliegenden Beispiel entsprechen die Parameterwerte 86a, 86b den Messwerten der Drucksensoren 24a, 24b und der Parameterwert 86c dem Betriebszustand der Pumpe 26 (z. B. "an" oder "aus"). Zusätzlich zeigen die den Drucksensoren 24a, 24b zugeordneten Datenfelder 84 auch ein spezifisches Komponentenkennzeichen 88a, 88b an, über das festgelegt ist, welcher der Parameterwerte 86a-c an der entsprechenden Stelle, d. h. innerhalb des entsprechenden Datenfelds 84, in der Anlagenbeschreibung A angezeigt wird. Diese Komponentenkennzeichen 88a, 88b können sich beispielsweise aus den Beschriftungen 80a, 80b und den zugehörigen Identifikationsnummern 82a, 82b zusammensetzen und einer Ermittlung der entsprechenden Parameterwerte 86a, 86b zugrunde gelegt sein.

Beispielsweise kann die Anlagenbeschreibung A durch Anlagendaten angereichert sein, die über den Standard OPC-UA von einem Server, auf dem auch die Anlagenbeschreibung A gespeichert ist, abgerufen wurden. Gemäß diesem Standard ist jedem steuerungsrelevanten Anlagenteil einer Anlage, zum Beispiel jedem Messglied, Stellglied und/oder dergleichen, eine OPC-Variable zugeordnet. Über die OPC-Variablen können die aktuellen, mit den Anlagenteilen assoziierten Parameterwerte 86a-c abgefragt werden.

In diesem Fall können die Komponentenkennzeichen 88a, 88b den entsprechenden OPC-Variablen der Drucksensoren 24a, 24b entsprechen oder zumindest einer Ermittlung der OPC-Variablen, z. B. durch Auslesen aus einer Datenbank, zugrunde gelegt werden.

FIG 4 zeigt ein Beispiel der mit Markern M versehenen Anlagenbeschreibung A aus FIG 3. Während in FIG 3 die Anlagenbeschreibung A so gezeigt ist, wie sie einem Benutzer dargestellt wird, bildet FIG 4 eine andere Ebene der Anlagenbeschreibung A ab, die für den Benutzer so nicht sichtbar ist.

Denn die Marker M dienen der Anreicherung der Anlagenbeschreibung A mit den Anlagendaten, insbesondere der Anzeige der in FIG 3 dargestellten Datenfelder mit den Parameterwerten und, im Falle der Drucksensoren 24a, 24b, der Komponentenkennzeichen. Anders gesagt können auf Grundlage der Marker M die Anlagendaten in die Anlagenbeschreibung A integriert werden. Erst wenn die Anlagendaten mittels der Marker M in die Anlagenbeschreibung A integriert wurden, stellt sich die Anlagenbeschreibung A für den Benutzer wie in FIG 3 gezeigt dar.

Die Marker M kennzeichnen dazu zweckmäßigerweise die Positionen in der Anlagenbeschreibung A, an denen die Anlagendaten, d. h. vorliegend die Parameterwerte, angezeigt werden sollen. Gleichzeitig können die Marker M aber auch diejenigen Anlagendaten vorgeben, die in der Anlagenbeschreibung A angezeigt werden sollen, d. h. welcher der Parameterwerte an der entsprechenden Stelle angezeigt werden soll. Zu diesem Zweck ist jedem der Marker M ein entsprechender Identifikator 92a, 92b, 92c zugeordnet.

Optional können die Marker M oder die ihnen zugeordneten Identifikatoren 92a-c auch die Darstellungsart der in der Anlagenbeschreibung A anzuzeigenden Anlagendaten festlegen bzw. vorgeben. Im vorliegenden Fall kann beispielsweise durch die Marker M vorgegeben sein, dass die Parameterwerte in umrahmten Datenfeldern angezeigt werden und im Falle der Drucksensoren 24a, 24b auch die Komponentenkennzeichen mit angezeigt werden. Ebenso können die Marker M grundsätzlich auch Schriftart, -farbe, -größe und/oder dergleichen vorgeben. Alternativ können die Marker M bzw. die ihnen zugeordneten Identifikatoren 92a-c der Ermittlung der Darstellungsart zugrunde gelegt werden, etwa wenn die Identifikatoren 92a-c in einer Datenbank - wie im Zusammenhang mit FIG 6 weiter unten im Detail erläutert - der entsprechenden Darstellungsart zugeordnet sind.

Die die Marker M enthaltene Anlagenbeschreibung A ist zweckmäßigerweise in einem vorbestimmten Dateiformat auf einem Server gespeichert, zum Beispiel als PDF-Dokument. Die Marker M können dabei als Textfelder 90 vorgesehen sein, die beim Anzeigen der Anlagenbeschreibung A für einen Leser, etwa durch die Wahl der Schriftfarbe des darin stehenden Textes, unsichtbar bleiben. In den Textfeldern 90 ist zweckmäßigerweise der Identifikator 92a, 92b, 92c enthalten, insbesondere als Zeichenstring.

Die Textfelder 90 können beispielsweise, zur Angabe der jeweils anzuzeigenden Anlagendaten, jeweils ein Erkennungszeichen, zum Beispiel ein Sternchen *, gefolgt von dem Komponentenkennzeichen, oder bereits einen vollständigen OPC-UA-Verbindungsstring (d. h. eine OPC-Variable bzw. eine OPC-UA-Adresse) enthalten. Die Erkennungszeichen und die Komponentenkennzeichen zusammen oder die OPC-UA-Verbindungsstrings dienen in diesem Fall als Identifikatoren 92a-c.

FIG 5 zeigt ein Beispiel eines Verfahrens 100 zur Verarbeitung von Anlagendaten, die einen Betriebszustand einer Anlage charakterisieren.

In einem Verfahrensschritt S1 wird eine von einem Server gehostete Webseite mit einem Endgerät geöffnet. Dazu verbindet sich das Endgerät zweckmäßigerweise mit dem Server über eine erste Kommunikationsverbindung, z. B. ein Netzwerk. Um Zugriff auf die Webseite oder über die Webseite bereitgestellte Inhalte, insbesondere auf eine in einem vorbestimmten Dateiformat gespeicherte Anlagenbeschreibung, zu erhalten, kann eine Anmeldung oder Authentifizierung des Endgeräts vorgesehen sein. Beispielsweise kann eine Passwortabfrage oder die Prüfung eines Zertifikats auf dem Endgerät erfolgen.

Das Öffnen der Webseite kann durch manuelles Eingeben einer URL in einen Browser durch einen Benutzer oder über Such- oder Filterfunktionen erfolgen. Denkbar ist aber auch, dass die Webseite zum Beispiel durch ein Scannen eines QR-Codes oder eines anderen maschinenlesbaren Codes wie DMC, der auf der Anlage angebracht ist, oder durch Empfang eines von der Anlage bereitgestellten Identifikationssignals, etwa per RFID, in dem Browser geöffnet wird.

In einem weiteren Verfahrensschritt S2 wird durch das Endgerät auf die Anlagenbeschreibung zugegriffen, zum Beispiel indem die entsprechende Datei mit einem (mit dem vorgegebenen Dateiformat kompatiblen) Anzeigeprogramm geöffnet wird. Die Anlagenbeschreibung kann beispielsweise als PDF-Dokument auf dem Server gespeichert sein und mit einem PDF-Viewer geöffnet werden. Zweckmäßigerweise wird die Datei dabei in einem Inlineframe (kurz iFrame) von einem vorbestimmten Anzeigeprogramm geöffnet. Aufgrund der Konfigurierbarkeit hat es sich als vorteilhaft erwiesen, hierzu den PDF-Viewer PDF.js einzusetzen.

Das vorbestimmte Anzeigeprogramm, vorzugsweise PDF.js, ist zweckmäßigerweise zur Auswertung der gespeicherten Anlagenbeschreibung, also zum Beispiel des PDF-Dokuments, eingerichtet. Zweckmäßigerweise gibt das vorbestimmte Anzeigeprogramm die Anlagenbeschreibung dabei als HTML-Seite aus, wodurch in der Anlagenbeschreibung bzw. dem PDF-Dokument enthaltene, z. B. als HTML-Tags implementierte Marker detektiert werden können.

Solche Marker können beispielsweise in Form von Textfeldern bzw. Textstrings in der gespeicherten Anlagenbeschreibung enthalten sein. Diese Marker sind beim Anzeigen der Anlagenbeschreibung im Anzeigeprogramm zweckmäßigerweise nicht sichtbar, etwa indem sie in einer entsprechenden Schriftfarbe vorgesehen sind. Solche Textfelder bzw. Textstrings sind in HTML jedoch mittels einer entsprechenden Abfrage detektierbar, etwa indem sie mit einem entsprechenden vorangehenden Erkennungszeichen, zum Beispiel einem Sternchen *, gekennzeichnet sind. Zum Detektieren solcher Marker kann beispielsweise die Javascript-Bibliothek jQuery eingesetzt, insbesondere in das vorgegebene Anzeigeprogramm eingebunden, werden. Das vorbestimmte Anzeigeprogramm stellt die ausgelesenen Marker dann zweckmäßigerweise zur Verwendung durch den Server bereit.

Auf Grundlage der detektierten Marker, insbesondere der Textfelder bzw. der Textstrings, können in einem weiteren Verfahrensschritt S3 durch den Server dann die Anlagendaten abgerufen werden. Den Markern ist dazu zweckmäßigerweise jeweils ein Identifikator zugeordnet, der die in die Anlagenbeschreibung zu integrierenden Anlagendaten spezifiziert, zum Beispiel anzuzeigende Parameterwerte definiert. Die Textfelder können beispielsweise eine vollständige OPC-UA-Adresse enthalten, sodass der Server über den OPC-UA-Standard die Anlagendaten direkt bei der Anlage oder einem Leitsystem abholen kann. In diesem Fall dient die OPC-UA-Adresse als Identifikator. Alternativ können die Textfelder Komponentenkennzeichen enthalten, die in einer Datenbank, z. B. einer Konfigurationsdatei, mit durch den Server abzufragenden OPC-UA-Adressen verschiedener Anlagenteile, z. B. Messgliedern, Stellgliedern oder anderer Anlagenkomponenten, verknüpft sind. Die Identifkatoren sind in diesem Fall zweckmäßigerweise aus dem jeweiligen Komponentenkennzeichen und einem vorangehenden Erkennungszeichen, etwa einem Sternchen *, gebildet.

In einem weiteren Verfahrensschritt S4 wird die Anlagenbeschreibung mit den derart abgerufenen Anlagendaten angereichert. Das vorbestimmte Anzeigeprogramm ist hierzu zweckmäßigerweise dazu eingerichtet, an der Position der gefundenen Marker Textboxen über die angezeigte Anlagenbeschreibung zu legen und die im Hintergrund zum Beispiel über OPC-UA abgefragten Anlagendaten, insbesondere Parameterwerte, in diese Textboxen hineinzuschreiben. Somit wird in Verfahrensschritt S4 gleichzeitig die mit den Anlagendaten angereicherte Anlagenbeschreibung über das Endgerät ausgegeben. Gegebenenfalls kann hier die Art der Darstellung der Anlagendaten innerhalb der Anlagenbeschreibung durch den jeweiligen Marker, insbesondere in ihm enthaltene Darstellungsinformation, beeinflussbar sein, zum Beispiel hinsichtlich des Schriftbilds, der Farbe und/oder dergleichen. Alternativ kann eine solche Darstellungsinformation auch in der bereits erwähnten Datenbank, zum Beispiel einer Konfigurationsdatei, in welcher die durch das vorbestimmte Anzeigeprogramm auslesbaren Komponentenkennzeichen mit den vom Server abzufragenden OPC-UA-Adressen verknüpft sind, enthalten sein.

FIG 6 zeigt ein Beispiel eines Verfahrens 200 zur Erstellung einer Anlagenbeschreibung.

In einem Verfahrensschritt Z1 wird eine Beschreibung einer Anlage erstellt, d. h. eine Dokumentation oder ein ähnliches technisches Dokument. Die Anlagenbeschreibung kann zum Beispiel neben Bedienungshinweisen auch Schaltpläne, Rohrleitungs- und Instrumentenfließschema und/oder dergleichen enthalten.

In einem weiteren Verfahrensschritt Z2 wird wenigstens ein Marker in die Anlagenbeschreibung eingefügt, auf dessen Grundlage die Anlagenbeschreibung mit Anlagendaten, die einen Betriebszustand der Anlage charakterisieren, anreicherbar ist. Die Marker können dabei nachträglich in die bereits erstellte Anlagenbeschreibung eingefügt werden. Dies erfolgt zweckmäßigerweise manuell, kann aber grundsätzlich auch automatisiert werden. Alternativ oder zusätzlich können die Marker aber auch beim Erstellen der Anlagenbeschreibung, d. h. im Rahmen des Erstellungsprozesses, in die Anlagenbeschreibung integriert werden. Dies ist besonders vorteilhaft, wenn auch der Erstellungsprozess zumindest teilweise automatisiert erfolgt, zum Beispiel durch Export aus einem CAD-Programm oder dergleichen.

Zum Erstellen der Anlagenbeschreibung mit zumindest teilweise automatisierter Markergenerierung ist es bevorzugt, die in der Anlagenbeschreibung zu beschreibenden Anlagenteile wie z. B. Drucksensoren, Pumpen, Antriebe und/oder dergleichen zu kategorisieren. Beispielsweise kann für jede Kategorie von Anlagenteilen, zum Beispiel Drucksensoren, ein bestimmter Markertyp oder zumindest eine vorbestimmte Darstellungsart vorgesehen sein. Zweckmäßigerweise wird hierzu in einer Datenbank, zum Beispiel in einer Konfigurationsdatei, für jede Kategorie von Anlagenteilen festgelegt, wie Parameterwerte dieser Anlagenteile in der angereicherten Anlagenbeschreibung dargestellt werden sollen. Zumindest aber kann in der Datenbank zu jeder Kategorie eine Information darüber, wie die Parameterwerte dieser Komponenten abrufbar sind, hinterlegt werden. Zum Beispiel kann der Datenbank für jede Kategorie eine generische OPC-UA-Adresse mit einem Platzhalter für ein Komponentenkennzeichen, d. h. eine Identifikationsinformation für ein einzelnes Anlagenteil, hinzugefügt werden.

Bei der Erstellung der Anlagenbeschreibung kann dann für jedes vorkommende Komponentenkennzeichen, d. h. jedes in der Anlagenbeschreibung zu beschreibende Anlagenteil, an vorbestimmten Stellen automatisch ein entsprechender Marker, zum Beispiel ein Textfeld mit dem durch ein vorangestelltes Erkennungszeichen gekennzeichneten Komponentenkennzeichen, eingefügt werden. Enthält ein darzustellendes Rohrleitungs- und Instrumentenfließschema etwa einen Drucksensor, kann beim Erstellen der Anlagenbeschreibung ein Textfeld mit dem Textstring *PI_1234 neben dem Schaltzeichen des Drucksensors erzeugt werden. Dabei entspricht das Sternchen * dem Erkennungszeichen und der String PI_1234 dem Komponentenkennzeichen, welches neben dem Typ bzw. der Kategorie des vorliegenden Anlagenteils (PI = Drucksensor) eine eindeutige Identifikationsnummer 1234 für dieses Anlagenteil enthält.

Die so erstellte Anlagenbeschreibung wird zweckmäßigerweise in einem weiteren Verfahrensschritt Z3 auf einem Server gespeichert. Wird die gespeicherte Anlagenbeschreibung geöffnet und die Marker wie im Zusammenhang mit FIG 5 beschrieben ausgelesen und an den Server übergeben, kann der Server die Komponentenkennzeichen gegebenenfalls mit der in der Datenbank vorgehaltenen Information verknüpfen und mit den entsprechenden OPC-UA-Adressen die Anlagendaten, zum Beispiel die entsprechenden Parameterwerte, abrufen. Die abgerufenen Anlagendaten können dann an den entsprechenden, durch die Marker gekennzeichneten Stellen in der Anlagenbeschreibung angezeigt werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: System
- 20: Anlage
- 22: Anlagensteuerung
- 24a, 24b: Drucksensor
- 26: Pumpe
- 30: Server
- 32: Speichervorrichtung
- 40: Endgerät
- 42: PC
- 44: Mobiltelefon
- 46: Laptop
- 48: Tablet
- 50: erste Kommunikationsverbindung
- 52: Luftschnittstelle
- 60: zweite Kommunikationsverbindung
- 62: Zwischenserver
- 70: Leitsystem
- 72: Steuerstand
- 80a, 80b: Beschriftung
- 82a, 82b: Identifikationsnummer
- 84: Datenfeld
- 86a, 86b, 86c: Parameterwert
- 88a, 88b: Komponentenkennzeichen
- 90: Textfeld
- 92a, 92b, 92c: Identifikator
- 100: Verfahren zu Verarbeitung von Anlagendaten
- S1: Webseite öffnen
- S2: Zugriff auf Anlagenbeschreibung
- S3: Anlagendaten abrufen
- S4: Anlagenbeschreibung anreichern und ausgeben
- 200: Verfahren zum Erstellen einer Anlagenbeschreibung
- Z1: Anlagenbeschreibung erstellen
- Z2: Marker einfügen
- Z3: Anlagenbeschreibung speichern
- A: Anlagenbeschreibung
- D: Anlagendaten
- M: Marker

## Patentansprüche

1. Verfahren (100) zur Verarbeitung von Anlagendaten (D), wobei
- auf eine auf einem Server (30) in einem vorbestimmten Dateiformat gespeicherte Beschreibung (A) einer Anlage (20) mit einem Endgerät (40) zugegriffen wird (S2),
- durch den Server (30) Anlagendaten (D), welche einen Betriebszustand der Anlage (20) charakterisieren, abgerufen werden (S3),
- die auf dem Server (30) gespeicherte Anlagenbeschreibung (A) mit den abgerufenen Anlagendaten (D) angereichert und über das Endgerät (40) ausgegeben wird (S4).

2. Verfahren (100) nach Anspruch 1, wobei das Abrufen der Anlagendaten (D) und/oder die Anreicherung der Anlagenbeschreibung (A) durch den Zugriff mit dem Endgerät (40) ausgelöst wird.

3. Verfahren (100) nach Anspruch 1 oder 2, wobei die Anlagendaten (D) durch den Server (30) während des Zugriffs mit dem Endgerät (40) auf die gespeicherte Anlagenbeschreibung (A) im Wesentlichen kontinuierlich abgerufen werden und/oder die Anlagenbeschreibung (A) während des Zugriffs mit dem Endgerät (40) auf die gespeicherte Anlagenbeschreibung (A) im Wesentlichen kontinuierlich mit den abgerufenen Anlagendaten (D) angereichert wird.

4. Verfahren (100) nach einem der vorangehenden Ansprüche, wobei wenigstens eine in den Anlagendaten (D) enthaltene Information bei der Anreicherung der Anlagenbeschreibung (A) einem spezifischen, in der Anlagenbeschreibung (A) beschriebenen Anlagenteil (24a, 24b, 26) zugeordnet wird.

5. Verfahren (100) nach einem der vorangehenden Ansprüche, wobei die Anlagendaten (D) Parameterwerte (86a, 86b, 86c) enthalten, welche bei der Anreicherung in die Anlagenbeschreibung (A) an vorbestimmten Positionen eingefügt werden.

6. Verfahren (100) nach einem der vorangehenden Ansprüche, wobei der Server (30) die Anlagendaten (D) von einem Leitsystem (70) zur Prozesssteuerung über eine erste Kommunikationsverbindung (50) abruft, und die Anlagendaten (D) dem Leitsystem (70) von der Anlage (20) über eine von der ersten Kommunikationsverbindung (50) verschiedene zweite Kommunikationsverbindung (60) bereitgestellt werden.

7. System (10) zur Verarbeitung von Anlagendaten (D), mit
- einem Server (30), auf dem eine Beschreibung (A) einer Anlage (20) in einem vorbestimmten Dateiformat gespeichert und der dazu eingerichtet ist, Anlagendaten (D), welche einen Betriebszustand der Anlage (20) charakterisieren, abzurufen und die Anlagenbeschreibung (A) damit anzureichern,
- ein Endgerät (40), und
- eine erste Kommunikationsverbindung (50) zwischen dem Server (30) und dem Endgerät (40), über welche mit dem Endgerät (40) auf die vom Server (30) gespeicherte Anlagenbeschreibung (A) zugreifbar ist.

8. System (10) nach Anspruch 7, mit einer von der ersten Kommunikationsverbindung (50) verschiedenen zweiten Kommunikationsverbindung (60) zwischen dem Server (30) und der Anlage (20), über welche die Anlagendaten (D) vom Server (30) abrufbar oder zumindest zum Abruf durch den Server (30) bereitstellbar sind.

9. System (10) nach einem der Ansprüche 7 oder 8, wobei die Anlagenbeschreibung (A) mehrere Marker (M) enthält, auf deren Grundlage die Anlagendaten (D) in die Anlagenbeschreibung (A) integrierbar sind.

10. System (10) nach Anspruch 9, wobei jeder Marker (M) jeweils eine Position innerhalb der Anlagenbeschreibung (A) definiert, an der eine in den Anlagendaten (D) enthaltene spezifische Information in die Anlagenbeschreibung (A) integriert wird.

11. System (10) nach einem der Ansprüche 9 oder 10, wobei jedem Marker (M) ein Identifikator (92a, 92b, 92c) zugeordnet ist, der eine in den Anlagendaten (D) enthaltene, in die Anlagenbeschreibung (A) zu integrierende Information definiert.

12. System (10) nach einem der Ansprüche 9 bis 11, wobei der Server (30) eine Datenbank aufweist, in der jedem Marker (M) eine Adressinformation zum Abrufen der Anlagendaten (D) und/oder eine von mehrere möglichen Darstellungsarten der Anlagendaten (D) beim Anreichern der Anlagenbeschreibung (A) zugeordnet ist.

13. Verfahren (200) zum Erstellen einer Anlagenbeschreibung (A), wobei
- eine Beschreibung (A) einer Anlage (20) erstellt wird (Z1),
- wenigstens ein Marker (M) in die Anlagenbeschreibung (A) eingefügt wird, auf dessen Grundlage die Anlagenbeschreibung (A) mit Anlagendaten (D), die einen Betriebszustand der Anlage (20) charakterisieren, anreicherbar ist (Z2), und
- die Anlagenbeschreibung (A) in einem vorbestimmten Dateiformat auf einem Server (30) gespeichert wird (Z3).
